(19)

**Europäisches Patentamt**
**European Patent Office**
**Office européen des brevets**

(11) **EP 4 369 637 A1**

(12) **EUROPEAN PATENT APPLICATION**

(43) Date of publication:
**15.05.2024 Bulletin 2024/20**

(21) Application number: **22207354.6**

(22) Date of filing: **14.11.2022**

(51) International Patent Classification (IPC):
**H04J 13/00** (2011.01)

(52) Cooperative Patent Classification (CPC):
**H04J 13/0055**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **3db Access AG**
**8800 Thalwil (CH)**

(72) Inventors:
• **Barras, David**
  **3960 Sierre (CH)**
• **Thirunarayanan, Raghavasimhan**
  **8618 Oetwil am See (CH)**

(74) Representative: **Calysta NV**
**Lambroekstraat 5a**
**1831 Diegem (BE)**

(54) **NEW TRANSMISSION CODE WITH ZERO CORRELATION ZONE AND MODULATED INFORMATION**

(57) Transmission code for transmission in a transmission channel, wherein the transmission code comprises a sequence of components, wherein each component can assume a first component value, a second component value and an idle value, wherein each component represents a transmission slot, wherein the first component value in one of the components represents the transmission of a first transmission symbol in the respective transmission slot, the second component value represents the transmission of a second transmission symbol in the respective transmission slot, wherein the idle value represents the transmission of no transmission symbol in the respective transmission slot, wherein the transmission code comprises a number M of at least two first groups and a plurality of second groups, wherein each first group comprises a number N of at least two components, wherein each component of each first group can assume the first component value and the second component value, wherein all the first groups have the same length, wherein each second group comprises only idle values, each two consecutive first groups are separated by one of the second groups, wherein the first groups are designed such that each first group can carry a bit and that the transmission code has a zero correlation zone property for any M bits carried by the first groups.

**EP 4 369 637 A1**

| | coefficient for | | | | | | | | | | | | | | | | | | | |
|---|---|---|---|---|---|---|---|---|---|---|---|---|---|---|---|---|---|---|---|---|
| | $z^0$ | $z^1$ | $z^2$ | $z^3$ | $z^4$ | $z^5$ | $z^6$ | $z^7$ | $z^8$ | $z^9$ | $z^{10}$ | $z^{11}$ | $z^{12}$ | $z^{13}$ | $z^{14}$ | $z^{15}$ | $z^{16}$ | $z^{17}$ | $z^{18}$ | $z^{19}$ |
| $-z^0 c_0(z)$ | 0 | 0 | 0 | -1 | -1 | | | | | | | | | | | | | | | |
| $z^9 c_1(z)$ | 0 | 0 | 0 | 0 | 0 | 0 | 0 | 0 | 0 | -1 | 1 | | | | | | | | | |
| $z^{14} s_0(z)$ | 0 | 0 | 0 | 0 | 0 | 0 | 0 | 0 | 0 | 0 | 0 | 0 | 0 | 0 | 1 | -1 | | | | |
| $z^{18} s_1(z)$ | 0 | 0 | 0 | 0 | 0 | 0 | 0 | 0 | 0 | 0 | 0 | 0 | 0 | 0 | 0 | 0 | 0 | 0 | -1 | -1 |
| $G(z)$ | 0 | 0 | 0 | -1 | -1 | 0 | 0 | 0 | 0 | -1 | 1 | 0 | 0 | 0 | 1 | -1 | 0 | 0 | -1 | -1 |

**Fig. 2**

**Description**

**Technical Field**

The present invention relates to a transmission code and a method, device and computer program for processing such a transmission code.

**Prior art**

The recently codified IEEE ultrawideband (UWB) standard 802.15.4z (IEEE, 2020) dictates all the specifications of an impulse radio UWB (IR-UWB) radio which are used for secure distance measurement (ranging) and localization. This standard specifies two flavours of IR-UWB physical layers namely the High Rate Pulse (HRP) and Low Rate Pulse (LRP). The HRP flavour uses Scrambled Timestamp Sequences (STS) for secure ranging. More recently, the next generation UWB IEEE standard 802.15.4ab that is currently being developed also includes Ranging Integrity Fragments that deal with secure ranging. In both the existing standards 802.15.4z as well as the proposed 802.15.4ab, the UWB packet for secure ranging consists of a deterministic preamble sequence (also called sync pattern) as well as the Scrambled Timestamp Sequence (STS). While the preamble is used for Signal acquisition (only in 802.15.4z) as well as to have a non-secure estimate of the early path (shortest distance), the STS is used to verify the security of the distance measurement.

The general problems of determining an early peak of a UWB signal shall be quickly resumed here. In order to detect the time of arrival of an UWB message, the received signal is correlated with an expected signal of a certain part of UWB message, normally the preamble. This correlation of the received UWB signal with an expected signal or template is often also called channel impulse response (CIR) as it provides the arrival time of each path of the transmitted message. The multi-path propagation of the UWB message has the consequence that the UWB message does not arrive only once at the receiver, but once for each different path of the UWB signal from the transmitter to the receiver. Normally, the direct path is the fastest and strongest path, normally called early path. However, in many scenarios, the early path is shielded, e.g. by the body of a human, and a longer reflection path is stronger. Therefore, the strongest path is not necessarily the early path. Thus, the early path could be hidden in the noise before the strongest correlation peak corresponding to a longer path of the UWB message. Not only the noise makes it hard sometimes to identify the early path, also the inter-pulse interference from the different paths weakens sometimes the correlation of some of the paths, maybe of the early path. This is because a first pulse of a first path might be received at the same time as a second pulse of a second path so that the two paths cancel each other out and weaken thus the correlation of a certain path. A further problem of the correlation of the received UWB signal with the expected UWB signal is that even the autocorrelation of the perfect UWB signal, thus the UWB message (part) with itself creates fake peaks (also called side lobes) due to occasional correlations. This is especially the case for random sequences like the STS. In order for not getting confused between these side-lobes and the early paths, the time of arrival of the early path is normally determined with special codes with specific properties such as the presence of a Zero Correlation Zone (ZCZ) in the CIR in order to have high sensitivity with regards to early path. A code with a ZCZ has a zero autocorrelation around the main peak corresponding to the zero delay. A ZCZ of 16 means that 16 times the inter-pulse distance around the main peak, there is no fake peaks due to the correlation of the signal with itself, i.e. -16 inter-pulse distances before and +16 inter-pulse distances after the main peak, all peaks correspond either to other paths or to other kind of noise not related to these type of fake lobes. For the preamble, normally IPATOV or Gold codes with this property is used. These codes have the advantage of getting a high-quality CIR for the received UWB message and allowing to determine the time of arrival of the early path with a high quality. However, these codes are well known to potential attackers allowing easily to fake the time of arrival by sending the preamble earlier.

This is why the additional STS is used to make the time of arrival measurement secure. The STS is a part of the UWB HRP frame. It consists of a binary sequence generated by a random number generator such as the AES 128 which is then convolved with a pre-defined pulse shape, upconverted to the desired carrier frequency. In order to avoid inter-pulse interference, the STS sends each bit only every eighth pulse position. This creates a ZCZ of seven pulses, but is not sufficient for robustly using the STS for the time of arrival (early path) measurement. Since the attacker does not have the random number, the STS can be used to authenticate the sender, i.e. for security. This can be done for example by a cross-correlation between the received signal and the expected STS code.

The separation of the preamble for precise time of arrival measurement and the STS for the security is currently the only way for performing a robust secure time of arrival measurement. However, this separation also has some drawbacks. For example, the attacker could easily anticipate the preamble for faking an earlier path and then with some special guess attacks to overcome the security provided by the STS. A further disadvantage is that the hardware needs to process both the preamble and the STS which increases the complexity of the hardware.

The preamble is actually not only used for time of arrival measurement, but also for detecting an UWB message in the receiver and/or for synchronizing the receiver on the transmitter. The new standard is also looking for preambles for detecting the UWB messages which are suitable for multi-user environments. Since the current standard uses for all users the same preamble, the receiver will detect all the messages in the environment from all users which creates a useless power consumption. It is therefore desirable that the receiver will detect only the UWB messages addressed to him.

The article "Are LAS-codes a miracle?" from Stanczak et al published in 2001 constructs Loosely Synchronized (LS) codes based on Golay Pairs. These LS codes have a ZCZ and can be used as for determining the CIR or for detecting the time of arrival. However, LS codes cannot carry information without destroying the ZCZ properties and a distinct random STS is necessary for making ranging secure.

Thus, secure ranging in the state of the art requires one code for the time of arrival measurement (e.g. the preamble) and another code for the security verification (normally an STS code). This necessitates additional processing hardware in the receiver and offers possible attacks to the secure ranging. However, it is currently no transmission code known which has a ZCZ property for robust time of arrival measurement or CIR determination and which allows to modulate information for verifying the security of the time of arrival measurement.

## Brief summary of the invention

It is the object of the invention to solve one or all of the above-described problems.

The object is solved by a transmission code according to claim 1 and by a method for processing such a transmission code and a device and program for processing such a transmission code.

The object is solved by a transmission code for transmission in a transmission channel, wherein the transmission code comprises a sequence of components, wherein each component can assume a first component value, a second component value and an idle value, wherein each component represents a transmission slot, wherein the first component value in one of the components represents the transmission of a first transmission symbol in the respective transmission slot, the second component value represents the transmission of a second transmission symbol in the respective transmission slot, wherein the idle value represents the transmission of no transmission symbol in the respective transmission slot, wherein the transmission code comprises a number M of at least two first groups and a plurality of second groups, wherein each first group comprises a number N of at least two components, wherein each component of each first group can assume the first component value and the second component value, wherein all the first groups have the same length, wherein each second group comprises only idle values, each two consecutive first groups are separated by one of the second groups, wherein the first groups are designed such that each first group can carry a bit and that the transmission code has a zero correlation zone property for any M bits carried by the first groups.

The object is further solved by a computer program comprising instructions, when executed on a processor to perform the steps of the method described above.

The object is further solved by a device configured to perform the steps of the method described above.

The object is further solved by a system of a transmitter and receiver, wherein the transmitter sends a transmission code as described above to the receiver.

The state of the art provides fixed (not carrying information) codes with grouped symbols having a ZCZ property like LS codes. Or it provides to transfer information with individual symbols separated by idle values to obtain a ZCZ property for information carrying codes like STS. The present invention now proposes to combine those two concepts to a new category of codes which transmits information/bits modulated on groups of at least two symbols maintaining still the ZCZ property. This allows to use the same code for determining an CIR at the receiver and verifying the security or information transmitted with the same code. When applying such a code for secure ranging, the number of available attacks for secure ranging are reduced significantly. However, this new code has potentially many applications like for example in multi user specific code/message detection.

The dependent claims refer to further embodiments of the invention.

In one embodiment, each first group is constructed based on one Golay element of at least one Golay pair of length N, wherein each Golay pair has a first Golay element and a second Golay element.

In one embodiment, the at least one Golay pair comprise two Golay pairs of length N being mates of each other.

In one embodiment, the at least one Golay pair comprise only one Golay pair.

In one embodiment, the M first groups can be divided in first set of first groups and a second set of first groups, wherein each first group of the first set corresponds on a first Golay element of one of the at least one Golay pair and has one related first group in the second set which is based on the second Golay element of the one of the at least one Golay pair

In one embodiment, the second groups have all the same length.

In one embodiment, at least one of the second groups has a different length than the other second groups.

In one embodiment, the second groups have a length being equal to or longer than N.

In one embodiment, the autocorrelation of the transmission code has the zero-correlation zone property.

In one embodiment, the cross-correlation of the transmission code with a complementary code has the zero-correlation zone property.

In one embodiment, the transmission code is a code which is detected at the receiver in the received signal by performing a correlation of the received signal. Preferably, the transmission code is detected by performing a correlation of the transmitted transmission code itself with the received signal, i.e. an autocorrelation when neglecting the noise. When the autocorrelation of the transmission code has the ZCZ property, the CIR can be determined with a high quality notwithstanding the transmitted information. When the transmission code is constructed such that the cross-correlation of the transmission code with the complementary code has the zero correlation zone property, the transmission code is detected by performing the correlation of the complementary code with the received signal.

In one embodiment, the transmission channel is a UWB radio channel.

In one embodiment, the transmission channel is pulsed transmission channel, wherein the first transmission symbol is a first pulse, wherein the second transmission symbol is a second pulse.

In one embodiment, the transmission code is a modulated transmission code carrying an information modulated on the first groups, wherein the information has bit length equal to or smaller than M, wherein each bit of the information is modulated on a different first group of the predefined transmission code. Preferably, the information is a random number.

In one embodiment, the transmission code carries an information, wherein the information has bit length equal to or smaller than M corresponding to the number M of first groups of the transmission code.

In one embodiment, the transmission code carrying the information is obtained by modulating the information on a predefined transmission code as defined above, wherein each bit of the information is modulated on a different first group of the predefined transmission code to obtain the modulated transmission code.

In one embodiment, a pair of a first transmission code as described above and of a second transmission code as described above is constructed, wherein the first and second transmission code are constructed such that the first order side lobes of their correlation functions disappear in the sum of the correlation functions of the first and second transmission code. Preferably, the first and second transmission code are different from each other, preferably carry different information.

In one embodiment, the transmission code modulated with the information is transmitted in the transmission channel to a receiving device.

In one embodiment, further information is transmitted outside of the transmission code in or outside of the transmission channel to the receiving device allowing the receiving device to detect the modulated transmission code in the received signal. Preferably, the receiving device is allowed to obtain the modulated transmission code or a complementary code whose cross-correlation with the transmission code has the zero-correlation zone property.

In one embodiment, the device generates a plurality of different transmission codes described above and transmits sequentially the different transmission codes in the transmission channel. Preferably, the plurality of different transmission codes comprise one or more pairs of transmission codes as defined above.

In one embodiment, the device receives a signal in the transmission channel, wherein the device computes a correlation of the modulated transmission code in the received signal.

In one embodiment, a correlation code is determined based on a further information received outside of the transmission code in or outside of the transmission channel which allows to detect the modulated transmission code by a correlation of the correlation code with the received signal. The correlation code is preferably the transmission code itself or a complementary code.

In one embodiment, a received signal comprises a plurality of different transmission codes, wherein the device computes different correlation functions for the different transmission codes in the received signal, wherein the plurality of correlation functions are summed up. Preferably, the plurality of different transmission codes comprise at least one pair of transmission codes as defined above such that the sum of the correlation functions have an extended ZCZ.

In one embodiment, a time of arrival of the transmission code is determined based on the correlation function. The correlation function could also be the sum of correlation functions as described in the previous paragraph.

In one embodiment, the information is decoded from the received signal at the time of arrival determined. Preferably, the time of arrival of the first group of the transmission symbol is determined based on the time of arrival of the transmission code determined, and the bit modulated on each first group is decoded from the signal received at the determined time of arrivals of the respective first group.

In one embodiment, the decoded information is used to verify the security of the time of arrival measurement.

In one embodiment, the decoded information is compared bitwise with a target information counting decoding errors, wherein the information is considered verified, when the decoding errors are lower than a certain threshold. Preferably, the threshold is larger than zero errors.

In one embodiment, the time of arrival determined and evtl. verified is used for a (secure) ranging or (secure) time of arrival measurement.

In the embodiment of summing the different correlation functions of different transmission codes, each transmission code carries a different information, wherein the information carried by each transmission code is decoded (as described above), wherein the time of arrival measurement is determined based on the sum of correlation functions, wherein the time of arrival measurement is verified based on the decoded information of all transmission codes.

The concept of actually decoding an information (already present at the receiver) to verify a time of arrival measurement is rather new and is not applied in the state of the art. Especially, the concept of accepting a certain number of errors in the decoded information but still verifying the time of arrival measurement. This allows to have a robust verification, even if the decoding is based on only the early path of the CIR and not the complete CIR as normally used for decoding data. In secure ranging, the transmitted verification information is normally not even decoded bitwise, but only decoded via the cross-correlation. By using the same transmission code for transmitting the information and for detecting the time of arrival, the resources at the receiver can be reduced.

Other embodiments according to the present invention are mentioned in the appended claims and the subsequent description of an embodiment of the invention.

## Brief description of the Drawings

Fig. 1 is shows the nomenclature for codes used in here.

Fig. 2 shows a calculation of one example transmission code according to the invention based on the equation 7.

Fig. 3 shows the autocorrelation function of the example transmission code of Fig. 2.

Fig. 4 shows the autocorrelation function for an example of a LS code according to prior art.

Fig. 5 shows how to modulate information on an LS code and how to obtain from such a modulated LS code a code according to the invention.

Fig. 6 shows the autocorrelation of the modulated LS code of Fig. 5 which looses its ZCZ.

Fig. 7 shows the autocorrelation function of the modulated LS code amended according to the present invention as shown in Fig. 5 in order to maintain the ZCZ.

Fig. 8 shows an embodiment of a system according to the invention using the transmission code according to the invention.

Fig. 9 shows the correlation functions of an example of a pair of transmission codes according to an improved embodiment of the invention.

In the drawings, the same reference numbers have been allocated to the same or analogue element.

## Detailed description of an embodiment of the invention

Other characteristics and advantages of the present invention will be derived from the non-limitative following description, and by making reference to the drawings and the examples.

The present invention refers to a sequence of transmission symbols of a transmission channel. The transmission channel is preferably a wireless transmission channel, preferably a radio transmission channel. The radio transmission channel is preferably an ultrawideband (UWB) transmission channel. However, the invention could be equally applied to other transmission channels like a wired transmission channel, a (wired or wireless) optical transmission channel, etc..

The transmission symbols are preferably binary symbols, meaning symbols which can transmit two bits, i.e. the symbol can have a first symbol value and a second symbol value (but not more). This is often also called binary shift keying, e.g. binary frequency shift keying (BFSK), binary phase shift keying (BPSK), binary amplitude shift keying (or on-off keying) or other. Thus, the transmission symbol can be a first symbol carrying a first symbol value (e.g. bit 0) and be a second symbol carrying a second symbol value (e.g. bit 1). However, the invention could also be applied to symbols transmitting another number of bits, e.g. four bits, eight bits. In this case the symbol can be also a third symbol carrying a third symbol value etc..

The sequence of transmission symbols is transmitted in a sequence of transmission slots (defined by the transmission protocol), wherein each transmission slot can transmit a transmission symbol (with one of the possible symbol values) or, as possible in some transmission protocols, make a transmission break and not sending a transmission symbol at the respective transmission slot. The transmission symbols are transmitted preferably one after the other, i.e. are transmitted sequentially. That is that the transmission slots are arranged timely one after the other (and not in parallel). The time between two transmission slots is called the inter-symbol or inter-slot time. The transmission slots are preferably arranged periodically so that the time between each two neighbouring transmission slots is the same or so that the inter-symbol or inter-slot time is always the same. However, it is also possible that the inter-symbol time is variable.

Preferably, each symbol is transmitted as pulse and/or the transmission channel is a pulsed transmission channel. The inter-symbol, inter-slot or inter-pulse time is preferably of a similar size as the transmission pulse itself (at least for within the first groups so that the pulses of the first group can be transmitted in a short burst of pulses). Preferably, the inter-pulse time is smaller than 5 times the duration of the transmission pulse, preferably smaller than 4 times the duration of the transmission pulse, preferably smaller than 3 times the duration of the transmission pulse, preferably smaller than 2 times the duration of the transmission pulse, preferably smaller than 1,5 times the duration of the transmission pulse. The pulses are preferably UWB pulses. UWB pulses are normally 2 nanoseconds (ns) long. For example, the inter-pulse time could be chosen 2 ns so that one pulse is sent right after the other. The invention will be explained for a pulsed UWB transmission but can be equally applied also to non-pulsed transmission and other radio and non-radio transmissions.

The invention refers to a transmission code, i.e. a sequence of transmission symbols, preferably of transmission pulses. The transmission code C of length L will be represented subsequently by a sequence of L components or coefficients $C=(c(1), c(2), ..., c(L))$. Each component represents one transmission slot of the transmission channel. The sequence of the components corresponds to the sequence of the transmission slots following the same timely order. Thus, the i-th component $c(i)$ represents the i-th transmission slot. The components $c(i)$ are indexed to define the respective component, wherein the index i (or other letter) can start from 0 (to L-1) or from 1 (to L) without any difference. If the index starts from 0, the i-th component would be the component $c(i-1)$.

The value of each component can have P+1 different component values, comprising P values corresponding to the P possible symbol values of the transmission symbol and one value corresponding to the non-sending of a symbol at the transmission slot, subsequently called idle value. Preferably, the transmission symbols are binary symbols with P=2. Thus, each component can assume a first component value or a second component value or the idle value. Subsequently, the first component value is represented by 1, the second component value by -1 and the idle value by 0. When the i-th component has the first component value, the first symbol or pulse is transmitted in the i-th transmission slot. When the i-th component has the second component value, the second symbol or pulse is transmitted in the i-th transmission slot. When the i-th component has the idle value, no symbol or pulse is transmitted in the i-th transmission slot.

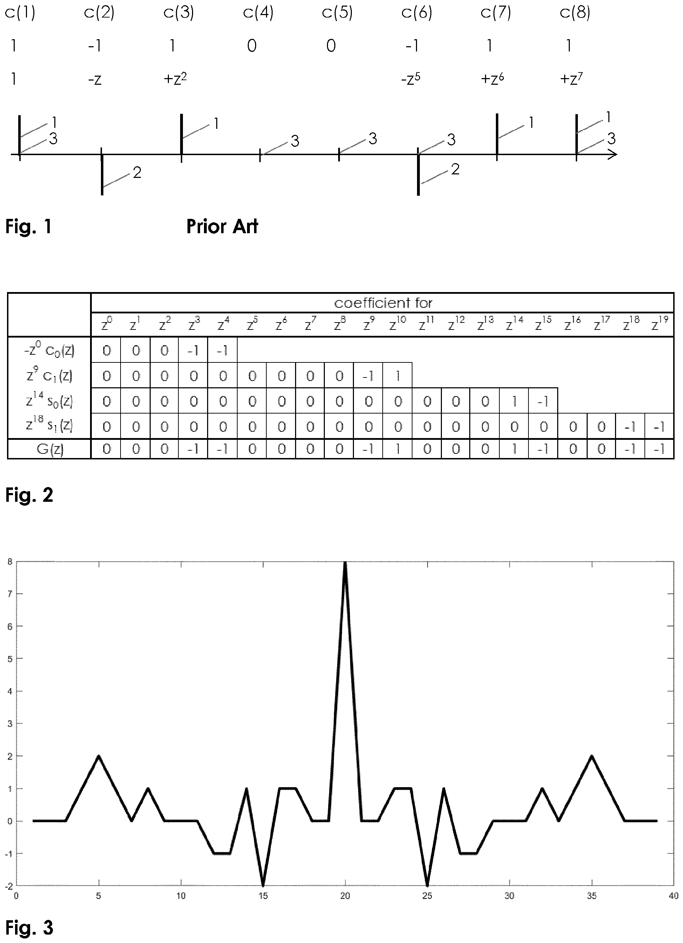

Fig. 1 shows an example of a transmission code C with length L=8. The first, third, seventh and eight components $c(1), c(3), c(7), c(8)$ have the first component value 1 and are transmitted at the corresponding first, third, seventh and eight transmission slot 3 with the first pulse 1. The second and sixth components $c(2), c(6)$ have the second component value -1 and are transmitted at the corresponding second and sixth transmission slot 3 with the second pulse 2. The fourth and fifth components $c(4), c(5)$ have the value 0 and the transmission code C does not transmit any pulse at the corresponding fourth and fifth transmission slot 3.

The transmission code must not correspond to a full transmission message, but could correspond to a certain portion of the transmission message, e.g. the preamble of the transmission message or another portion of the transmission message.

Mathematically, the code C can equivalently be represented by a polynomial function of the order L-1, wherein the L coefficients for the polynomials represent the L components of the code C. of length L can also be represented by the polynomial function

$$C(z) = \sum_{i=0}^{L-1} c(i) * z^i$$

with the coefficient of the polynomial $z^i$ representing the value of the component at the i+1-th position of the code. Fig. 1 shows also the polynomial representation of the exemplary code C.

The auto-correlation function of a code C is defined as

$$R_C(d) = \sum_{i=1}^{L-d} c(i)c(i+d)$$

with d being the shift or delay of the autocorrelation between the code with itself.

The cross-correlation between two codes C1 and C2 is defined as

$$R_{C1,C2}(d) = \sum_{i=1}^{L-d} c1(i)c2(i+d)$$

Assuming that both codes C1, C2 have the same length L.

The invention presents a new transmission code which allows to carry information and has a ZCZ. The new transmission code is based on the theory of Golay pairs. The definition of Golay pairs is well known but shall be quickly resumed here.

A Golay pair $(c_0, s_0)$ is the pair of a first Golay element $c_0$ of length N and a second Golay element $s_0$ of length N satisfying the perfect autocorrelation property (equation 1)

$$R_{c0}(d) + R_{s0}(d) = 2N\delta(d)$$

wherein $\delta(d)$ is the Dirac delta function which is 1 for d=0 and 0 elsewhere. In other words, the sum of the autocorrelation $R_{c0}(d)$ of the first Golay element $c_0(z)$ and of the autocorrelation $R_{s0}(d)$ of the second Golay element will be 2N for a zero delay or shift d=0 and zero otherwise. The Golay elements of a Golay pair have the same length. The length N of a Golay pair shall refer to the length N of its Golay elements. A Golay element is a code or sequence of components whose component value can be (only) the first component value or the second component value. The Golay element cannot have a component with an idle value. The Golay elements in their polynomial representation are written as $c_0(z)$ and $s_0(z)$. One more Golay pair $(c_1(z), s_1(z))$ can be derived from the first Golay pair $(c_0(z), s_0(z))$ using the equations 2:

$$c_1(z) = z^{(n-1)} * s_0(z^{-1}) \ \& \ s_1(z) = -z^{(n-1)} * c_0(z^{-1})$$

These two Golay pairs $(c_0(z), s_0(z))$ and $(c_1(z), s_1(z))$ are the mates of each other. Golay pairs are called mates or mating, if the sum of the cross correlation of the first Golay elements of the mating pairs and the cross correlation of the second Golay elements of the mating pairs is zero everywhere (equation 3)

$$R_{c0,c1}(d) + R_{s0,s1}(d) = 0.$$

The pairs (c0,c1) and (s0,s1) are also mates of each other. (c0,c1) and (s0,s1) form each itself a Golay pair with the above-mentioned property of their autocorrelation functions, respectively.

A simple Golay pair of length N=2 is

$$c_0 = [1,1] \ \& \ s_0 = [1,-1].$$

Or in its polynomial representation

$$\left(c_0(z), s_0(z)\right) = (1 + z, \ 1 - z)$$

when using the equation 2, the mating second Golay pair can be calculated

$$c_1(z) = z^1 s_0\left(\frac{1}{z}\right) = -1 + z; \quad s_1(z) = -z^1 c_0\left(\frac{1}{z}\right) = -1 = -1 - z;$$

or in its vector representation

$$c_1 = [-1,1] \ \& \ s_1 = [-1,-1].$$

Longer Golay pairs could be developed starting from the basic pair $c_{0,2} = [1,1]$ & $s_{0,2} = [1,-1])$ using the recursions which allows to obtain a first Golay pair $(c_{0,2n}, s_{0,2n})$ of length 2n based on a first Golay pair $(c_{0,n}, s_{0,n})$ of length n by the equation 4:

$$\left(c_{0,2n}, s_{0,2n}\right) = \left(c_{0,n}(z) + z^n s_{0,n}(z), c_{0,n}(z) - z^n s_{0,n}(z)\right)$$

and similarly the second Golay pair $(c_{1,2n}, s_{1,2n})$ of length 2n can be computed based on a second Golay pair $(c_{1,n}, s_{1,n})$

of length n by the equation 5:

$$(c_{1,2n}, s_{1,2n}) = \left( z^{2n-1} s_{0,2n}(z^{-1}), - z^{2n-1} c_{0,2n}(z^{-1}) \right).$$

The above Golay pairs and equations to obtain them are just example Golay pairs and any other Golay pair can be used for the invention which fulfil the definition of the Golay pair.

The present invention proposes now a new code based on at least one Golay pair which is able to carry information without loosing the ZCZ property. The proposed transmission code comprises M first groups and O second groups. Wherein M is the number of first groups and O is the number of second groups. The transmission code has at least two first groups (M>=2). The transmission code comprises one second group between each two consecutive first groups. Thus, the first and second groups alternate in the transmission code. Consequently, the number O of second groups can be M-1, M or M+1. In a preferred embodiment, O=M or the number M of first groups corresponds to the number O of second groups.

While the second groups contain only idle values or zeros, the first group contains only non-idle values, i.e. component values related to an actually transmitted symbol. Thus, the first groups contain components which can assume the first component value and the second component value (but not the idle value). Preferably, the first groups contain only components with the first component values and/or the second component values.

The first groups have all the same length N. The length of the second groups can be the same for all the second groups or could be different for one or more second groups. The number $w_i$ shall be the length of the i-th second group. When all the second groups have the same length W, $w_i = W$ for all i=1, ...,O. However, the length of the second groups can also be different. In this case the minimum length of the second groups min $(w_i) = W$ shall be defined as W. The minimum length of the second groups W is actually an important parameter as it defines the length of the ZCZ=W. The minimum length W can be arbitrarily as one or more. However, the higher W, the larger the ZCZ. Preferably, the minimum length W of the second groups is chosen N or higher. If the length of the second groups are different, it can be that only one second group has a different length and all the others have the same length or it can be that all the second groups have each a different length or something in between. In one embodiment with different lengths of the second groups, the length of each group can be chosen randomly for each second group (maybe within a range of possible lengths).

The first groups are constructed such that the transmission code as a whole has a ZCZ property (of W) which is maintained when modulating the first groups by bits.

One example for such a class of codes which fulfil this property are Golay pairs. Each first group of the transmission code is constructed based on one Golay element of at least one Golay pair of length N. A first group can be equal to the Golay element of the pair or could be multiplied by +1 or -1. In particular, it is possible that a first group is based on the first Golay element of the Golay pair multiplied with +1 and a second group is based on the second Golay element of the Golay pair multiplied with -1 without the transmission code loosing its ZCZ properties. This characteristic indeed allows to modulate one bit per first group on the transmission code. Preferably, the M first groups can be divided in a first set of first groups and a second set of first groups, wherein each first group of the first set corresponds on a first Golay element of one of the at least one Golay pair and has one related first group in the second set which is based on the second Golay element of the one of the at least one Golay pair. In other words, in the transmission code there are always two first groups based on two Golay elements of the same Golay pair. Due to the property of the Golay pairs shown in equation 1, the effect of the two first group of a Golay pair in the autocorrelation of the transmission code will be nulled. This guarantees that the ZCZ property can be maintained even though the first groups are of length larger than 1. The transmission code could be constructed by Golay elements of only one Golay pair. The transmission code could also be constructed by the Golay elements of (only) two mating Golay pairs.

The transmission codes G(z) could be constructed for example by the equation 7

$$G(z) = \sum_{i=1}^{p} \left[ B_{2i-1} z^{\sum_{m=1}^{i} w_m} c_{\pi i}(z) + B_{p+2i-1} z^{pN + \sum_{f=1}^{p+i} w_f} * s_{\pi i}(z) \right] * z^{(i-1)N}$$

with B being a random sequence of length M and $B_i$ being the i-th component of the random binary sequence B of length M having the first component value or the second component value for i=1 ..., M. In other words, B is any sequence of ones and minus ones of length M. The binary sequence B of length M corresponds actually to the information modulated on the (first groups of the) transmission code. However, the derived "modulated" transmission code according to equation 7 could be also used as base code which is then modulated by another binary sequence B' of length M for modulating the information on the transmission code. p being the number M of first groups divided by two. The two Golay pairs $(c_0(z),s_0(z))$ and $(c_1(z),s_1(z))$ are mating Golay pairs. $\pi i$ being the i-th bit of the binary representation $\pi$ of a random or arbitrary integer in the set [0,2$^p$ - 1]. In other words, $\pi = (\pi 1, ..., \pi i, ..., \pi p)$ is the sequence of p random/arbitrary bits. The i-th bit $\pi i$ defines, if the i-th and i+1-th first group are constructed based on the first Golay pair or based on the second Golay pair. $w_i$ being the length of the i-th second group, i.e. the number of zeros inserted in the second group. While the equation defines the position of the Golay elements of the same Golay pair (as consecutive first groups), they could be positioned arbitrarily within the transmission code at the position of any first group without any consequence for the ZCZ. Also, other Golay pairs can be used. For example, the Golay element $s_0(z)$ could be replaced by the Golay element $c_1(z)$, because they also form a Golay pair $(c_0(z), c_1(z))$ (or vice versa). Also, the Golay element $c_0(z)$ could be replaced by the Golay element $s_1(z)$, because they also form a Golay pair $(s_1(z), s_0(z))$.

Subsequently, an example transmission code will be constructed with the above given equation 7. The above defined two mating Golay pairs of length N=2 are used

$$c_0(z) = 1 + z;$$

$$s_0(z) = 1 - z$$

$$c_1(z) = -1 + z;$$

$$s_1(z) = -1 - z$$

With the other parameters chosen

$$B = (-1,1,1,1) \rightarrow v = 4, \ p = 2$$

$$\pi = (0,1)$$

$$w_1 = 3, \ w_2 = 4, \ w_3 = 3, \ w_4 = 2$$

Then, the transmission code is calculated with equation 7 by

$$G(z) = -1 * z^{w_1} c_0(z) + 1 * z^{(2N+w_1+w_2+w_3)} s_0(z) + 1 * z^{(N+w_1+w_2)} c_1(z)$$
$$+1 * z^{(3N+w_1+w_2+w_3+w_4)} s_1(z)$$

$$G(z) = -z^3 c_0(z) + 1 * z^{14} s_0(z) + 1 * z^9 c_1(z) + 1 * z^{18} s_1(z)$$

Fig. 2 shows the calculation of the Golay elements with the respective polynomials resulting in the exemplary transmission code according to the invention

$$G = (0,0,0-1,-1,0,0,0,0,-1,1,0,0,0,1,-1,0,0,-1,-1)$$

Fig. 3 shows that indeed this transmission code has a ZCZ=W=2 corresponding to the minimum length of the second group and that this ZCZ is not destroyed by grouping the symbols in the first groups and by modulating the first groups with information. As can be seen from the formula 7, the transmission code G could be modulated with any of the 2$^M$ possible information vectors B without changing the ZCZ property. This new transmission code is thus the first transmission code which combines a ZCZ property, a grouping of symbol carrying code components (also called bursts) and a modulation of this code with an information. It can be seen that if all elements of $\pi$ are the same (either all 0 or all 1), the transmission code is constructed based on only one Golay pair.

Considering the exemplary transmission code G=[ $a_3$, $c_0$, $a_4$, $c_1$, $a_3$, $s_0$, $a_2$, $s_1$] of Fig. 2 with $a_w$ being a second group of length w according to the equation 7, the transmission code can be further changed as described above. For example, the order of the Golay elements could be changed arbitrarily without any consequence for the ZCZ, e.g. G'=[ $a_3$, $s_0$, $a_4$, $c_1$, $a_3$, $c_0$, $a_2$, $s_1$]. As mentioned, it is also possible to replace one Golay element with another mating Golay element in one or more first groups, e.g. the Golay element $s_0(z)$ could be replaced by the Golay element $c_1(z)$ without any consequence for the ZCZ which would yield for the exemplary transmission code G above G"=[ $a_3$, $c_0$, $a_4$, $c_1$, $a_3$, $c_1$, $a_2$, $s_1$]. Alternatively or additionally, the Golay element $c_0(z)$ could be replaced by the Golay element $s_1(z)$ obtaining for example G'''=[ $a_3$, $s_1$, $a_4$, $c_1$, $a_3$, $c_1$, $a_2$, $s_1$].

When comparing the code according to the invention with the solution of an STS which is a code with one random bit/pulse every eighth transmission position, thus a code wherein each random bit is separated by seven zeros. An STS code with 512 transmission slots transports 64 random bits/pulses and the remaining transmission slots are zero or idle. This STS has a ZCZ of 7. So, the STS can carry information and has a ZCZ property, but does not allow to group the random bits in bursts without destroying the ZCZ property. When using the transmission code according to the invention transmitting the same 64 pulses in (first) groups (bursts) of N=8 separated by 56 zeros each (W=56). Thus, the same number of pulses can be transmitted, but with a ZCZ of 56 instead of 7. This allows to use such a transmission code for CIR or early path detection or time of arrival measurement. In addition to this increased ZCZ, the code allows to transport an information of 8 bit by modulating the 8 bursts/ first groups with the 8 bits. The transmitted information might be reduced compared to STS, but at the gain of a significant increase in the ZCZ. The properties of the bursts based on the Golay pairs allow to maintain the ZCZ obtained by the zero-groups, even though the bursts contain more than one pulse.

When comparing the LS codes of the state of the art with the transmission code of the present invention, the LS codes have ZCZ property and group the symbols with a reduced number of zeros. However, the LS code does not allow to modulate any information on the LS code without destroying its ZCZ property. Let's take the example of the LS code constructed on Golay pairs of length N=4

$$LS = [1,1,1,-1,1,-1,1,1,0,0,0,0,1,1,-1,1,1,-1,-1,-1]$$

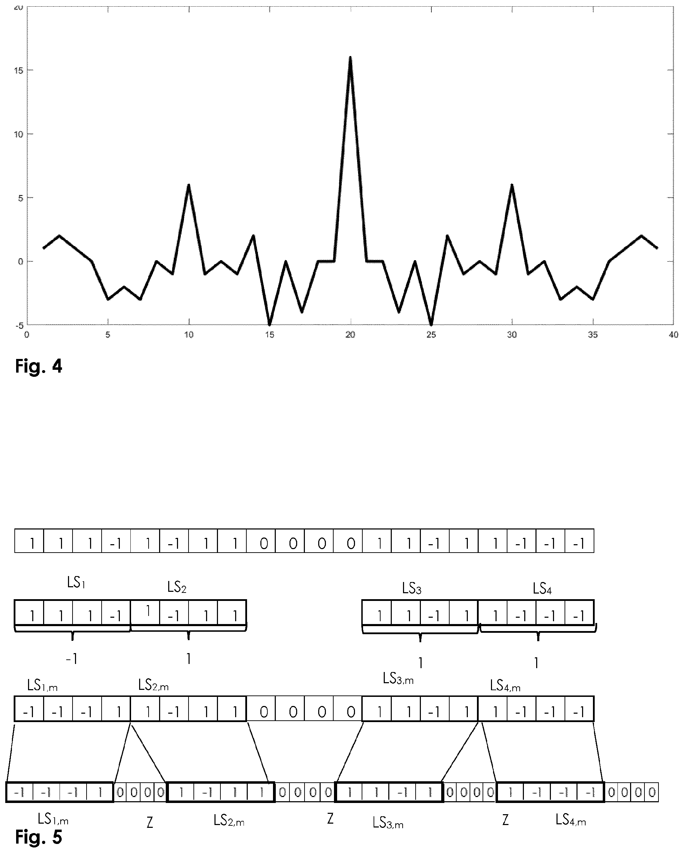

With a ZCZ of 3 as shown in Fig. 4. However, when we modulate the groups

$$LS_1 = [1,1,1,-1]$$

$$LS_2 = [1,-1,1,1]$$

$$LS_3 = [1,1,-1,1]$$

$$LS_4 = [1,-1,-1,-1].$$

with B = [-1,1,1,1] obtaining the modulated groups

$$LS_{1,m} = [-1,-1,-1,1]$$

$$LS_{2,m} = [1,-1,1,1]$$

$$LS_{3,m} = [1,1,-1,1]$$

$$LS_{4,m} = [1,-1,-1,-1].$$

resulting in the modulated LS code

$$\text{LS}_{\text{mod}} = [-1, -1, -1, 1, 1, -1, 1, 1, 0, 0, 0, 0, 1, 1, -1, 1, 1, -1, -1, -1]$$

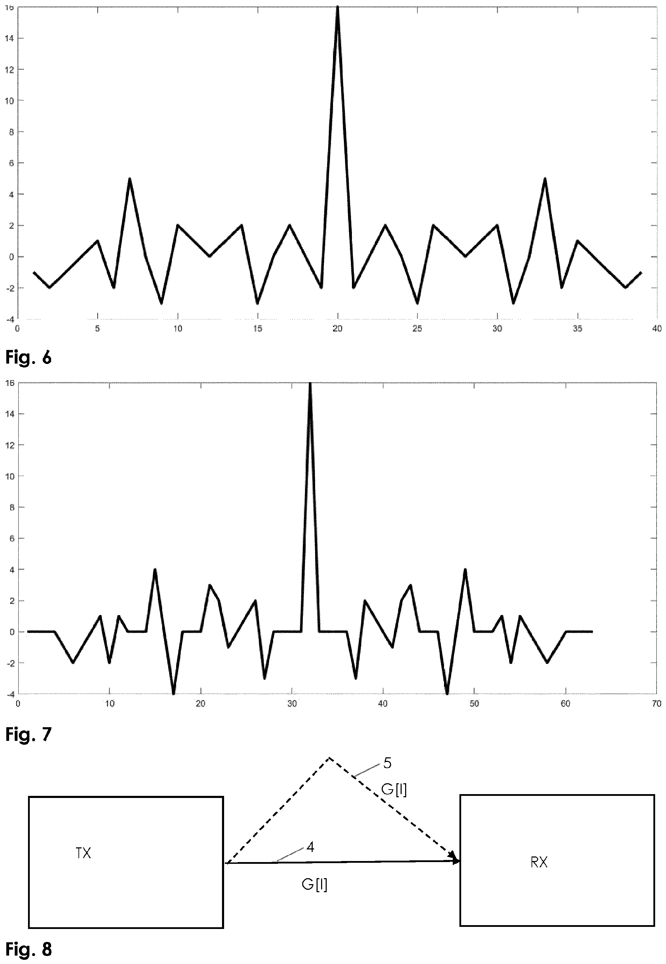

as shown in the third line of Fig. 5. However, the modulation destroys the ZCZ as can be seen in Fig. 5. The LS code is also constructed based on Golay pairs. When inserting in the LS code second groups Z of zero between each group $\text{LS}_i$ a transmission code of the invention is obtained which can be modulated without destroying the ZCZ as can be seen in Fig. 6.

As explained, the transmission code is configured to carry information. The transmission code can modulate one bit per first group. So, the transmission code can carry an information of M bits (or smaller). The information is preferably a random number or often also called nonce. However, depending on the application, also other types of information can be carried by the transmission code. Instead of a random number, the information could be an address code identifying the receiver. So, the information carried is not for security, but only for the purpose that only the receiver will detect the message in the communication channel.

The transmission code according to the invention is a transmission code that is used (in its entirety) for calculating the cross-correlation with a received signal to detect the transmission code in the received signal. This cross-correlation can be used for different purposes like for detecting the time of arrival of the transmission code in the transmission channel, for determining the channel impulse response (CIR) of the transmission channel, for detecting a message in the transmission channel, etc. When using the cross-correlation of the transmission code for detecting the time of arrival, preferably the time of arrival of the early path 4 is meant, i.e. the shortest path 4 between the transmitter TX and the receiver RX and not reflected longer paths 5 which arrive with the same message containing G[I] later than the direct/early path 4.

The transmission code according to the invention is processed in a device. The device can be a transmitter or a receiver or a transceiver having the function of a transmitter and receiver. The device is for example a transmitter, receiver or transceiver chip or any device including such transmitter, receiver or transceiver function.

The transmission code G[I] with the modulated information I needs to be prepared in the transmitter TX before transmitting and/or in the receiver RX for detecting the transmission code G[I] in the received signal. The preparation of the transmission code based on the information I will be described only once, even though the description holds for the transmitter and for the receiver equally.

Preferably, the receiver RX / transmitter TX stores a reference transmission code G[0] with a reference set of M first groups S0. The information I is modulated on the set of M first groups S0. Thus, each of the M bits of the information I is modulated on a different one of the first groups. Preferably, the bit 1 is modulated by multiplying the first group with +1 and the bit 0 is modulated by multiplying the first group with -1, i.e. by inverting the first group. However, this can be done vice versa (0 -> +1, 1 -> -1). Obtaining a modulated transmission code G[I]. In case, the second groups have variable lengths defined by the second group $I_w$, the second groups of the transmission code $G[I, I_w]$ are varied as well based on this information $I_w$. However, it is also possible to generate the transmission code G[I] or $G[I, I_w]$ not from a reference transmission code G[0] but generate each time a completely new transmission code according some or all parameters of equaltion 7. It is also possible to have different reference transmission codes G[0] depending on a transmission modus, e.g. of different length L, with different number M of first groups, with different length N of the first groups and with different (minimum) length W of the second groups. Subsequently, the generated transmission code is just referred as G[I] without any limitation that the transmission code G[I] could be generated based on more information like $I_w$, L, M, N, W, etc. Each of those parameters could be changed from transmission code to transmission code or could be fixed by the chosen transmission protocol. Preferably, at least I modulated on the first group changes from one transmission code to the next one sent by the same transmitter Tx.

The transmitter TX transmits the generated transmission code G[I] to the receiver RX. It is clear that the transmission code G[I] is processed in the physical layer of the transmission channel to transmit the transmission code G[I] like modulating the code components with the respective transmission symbols at the respective transmission slots 3 and/or modulating this signal on a carrier frequency. However, these details of the physical layer are clear to a person skilled in the art and the terminology transmission code G[I] is not changed for the data layer and the physical layer of the OSI model. The transmission code G[I] is normally sent within a transmission message defined by the transmission protocol of the transmission channel. The transmission code G[I] could be used as preamble of the transmission message.

The transmission code G[I] is sent out. The transmission code G[I] travels via at least one transmission path 4, 5 of the transmission channel to the receiver RX. Depending on the transmission channel, the at least one transmission path 4, 5 could comprise a plurality of transmission paths 4 and 5 to the receiver RX.

The receiver RX receives a signal in the transmission channel carrying the transmission code G[I] of each of the at least one path 4, 5. The timely relation between the different paths (if more than one) and their relative strength is defined by the CIR. The CIR can be obtained by the cross-correlation of the received signal with a code known by the receiver RX to be contained in the received signal, e.g. the transmitted transmission code G[I].

The receiver RX generates the same transmission code G[I] as the transmitter TX as explained above. The transmission code G[I] is preferably generated based on parameters defined by the transmission protocol and/or received from the transmitter TX. Preferably, the transmitter TX transmits at least one parameter of the transmission code G[I], preferably the modulated information I and maybe also the variable length information $I_w$ to the receiver RX so that the receiver RX can generate the same transmission code G[I] as transmitted by the receiver RX. These parameter(s) can be sent encrypted or based on any transmission protocol (e.g. via a seed information) from the transmitter TX to the receiver RX. These parameter(s) can be sent in the same transmission channel or in an out of bound channel. For example, when the transmission channel is a UWB channel, the out of bound channel can be a narrowband channel which is more suitable for transferring data. The parameter(s) is preferably transmitted in a way that third parties cannot intercept it. The parameter(s) can be transmitted before or after (or at the same time as) the transmission code G[I]. However, in another embodiment, the information for generating the transmission code G[I] can also be obtained differently than by receiving it from the transmitter TX.

The receiver RX receives the signal in the transmission channel. This involves normally the receival of the signal in the physical layer (including eventually some downmixing, filtering, amplification, etc.). Preferably, the analogue signal is digitalized by an analogue to digital converter to process the received signal digitally. The receiver RX performs a cross-correlation of the prepared transmission code G[I] (which is expected to be received in the signal of the transmission channel) with the received signal. The cross-correlation is performed preferably with the digital signal received. However, it could also be performed in the analogue signal with corresponding analogue elements. When we talk about a correlation of the transmission code G[I] with the signal, it is clear that the transmission code G[I] in the form of the physical layer, i.e. in the same form as the correlated signal is used for the correlation. For example, if the signal in the base band is used, the corresponding transmission code G[I] in the base band must be used for the correlation. This is well known to the person skilled in the art and for simplicity we just talk about a (cross-) correlation of the transmission code with the signal.

At the time, when the signal contains the transmission code G[I], the cross-correlation of the signal with the transmission code G[I] will create a cross-correlation which corresponds to the auto-correlation of the transmission code G[I] with itself (when neglecting the noise and multi-path interference). Thus, due to the ZCZ property of the transmission code G[I], a clear peak would be visible in the cross-correlation without fake sidelobes around this peak in the ZCZ. This allows to detect a clear peak for each transmission code G[I] received via each path 4, 5. When the ZCZ is chosen large enough for the inter-path interference, i.e. the time between the first and the last (measurable) path, a clear CIR can be determined. This can be used for decoding subsequent data transmitted with a higher quality or simply to detect the earliest path and thus the earliest time of arrival of the transmission code G[I].

For secure time of arrival measurement, the information I carried by the transmission code G[I] is verified to verify the security or integrity of the time of arrival measurement. In the simplest case, the verification can be realized by the fact that the receiver can only detect the transmission code G[I] in the signal, if it knowns the information for generating the transmission code G[I]. So, already the detection of the transmission code G[I] in the received signal is a kind of verification. However, a higher security level can be achieved, when the information I is actually decoded from the signal and verified with corresponding information I known to the receiver RX, preferably received from the transmitter TX. Preferably, the decoding is done only at the time of arrival of the transmission symbols of the transmission code determined from the time of arrival of the early path determined from the CIR or cross-correlation described before. Normal data decoding uses all paths received in order to maximize the power of the signal received to reduce the number of errors in the decoding. Preferably, the transmission slots of the symbols/pulses of the first groups are chosen close together so that any attack which listens the first pulses/symbols of the first group and fakes a second half of the first group would allow only a very short time manipulation. For example, when reducing the inter-pulse time of UWB pulses to the duration of the UWB pulses of 2 ns, the length of a first group of 4 pulses is 8 ns so that such an attack could only manipulate by some few meters. However, in environments with high noise and/or complex multi-path interference, the verification of the received information by a (early path) time-precise decoding might be more error prone than other state of the art verification methods which are based on the full CIR. Therefore, a certain error rate of the decoded bits is normally allowed to obtain a robust verification method. Even if the time-precise decoding is probably the most secure verification method, alternative verification methods are also possible.

One important application for secure time of arrival measurement is the secure distance measurement also called secure ranging. For secure ranging the transmission code is also called Integrated Ranging Integrity Sequence (IRIS) as it integrates the random number previously transmitted separately with the STS for the integrity of the distance measurement in the code used for making the cross-correlation or CIR (previously the preamble). However, the secure time of arrival measurement could also be used for other application like radar applications, etc. By integrating the security information I in the same transmission code G[I] used for determining the early path, increases the security of the ranging or time of arrival significantly, because it excludes a large number of attacks using exactly the fact that the time or arrival is determined separately from the secure element.

Another advantage of the presented transmission codes G[I] of the invention is that they are multi-user ready without any additional processing. Since each transmission code G[I] transmitted by different users based on the transmitted information I, only the receiver RX expecting the transmission code G[I] intended for him will detect the transmission code G[I], while the other receivers RX expecting different transmission codes G[I'] will not detect the transmission code G[I]. This is because the correlation with the different transmission codes G[I'] from other transmitters TX will not be detected or detected weaker in the correlation of the signal with the transmission code G[I]. This multi user characteristic can be further improved by having variable lengths of the second groups as this will further reduce the correlation between different transmission codes $G[I, I_w]$ and $G[I', I_w']$ will be even weaker. Thus, when the receiver RX receives two transmission codes $G[I, I_w]$ and $G[I', I_w']$ from different transmitters TX and TX', the transmission code $G[I', I_w']$ from the other transmitter TX' not intended for the receiver RX will disturb less the determination of the cross-correlation of the received signal with the transmission code $G[I, I_w]$. The new code allows thus (secure) ranging which is very robust in mutli-user environments. This holds also for application which do not require security but multi user robustness.

While the main application is certainly secure distance measurement, the transmission code according to the invention could also be used for other application.

One application could be a receiver sensitive preamble. In such an application, each receiver would have a different transmission code $G[I, I_w]$, maybe each with a different I or each with a different I and Iw so that the receiver RX would actually detect only the messages or preambles addressed to the receiver RX as the other receiver RX would scan the received signal for different transmission codes $G[I', I_w']$.

Alternatively, or in addition, the transmission code $G[I, I_w]$ could be used to improve the quality of the CIR by reducing the interference of other transmission codes $G[I', I_w']$ sent by other users.

Even if the transmission code was explained with the example of Golay elements/pairs, other classes of codes with similar properties could also be used for the present invention.

The transmission code G described above has an auto-correlation with a ZCZ property. It would however also be possible to have a transmission code G which has (only or in addition) a cross-correlation with a complementary code with the ZCZ property. In this case, the transmission code would be transmitted and the receiver does a correlation of the complementary code with the received signal to determined the correlation function with the ZCZ property.

In one embodiment, instead of transmitting one very long transmission code, a plurality of smaller transmission codes are transmitted. The receiver determines a correlation function for each transmission code transmitted in the received signal and sums their correlation functions up. The correlation functions to compute at the receiver are thus shorter which is computationally better. It is better to compute Q correlation functions of length L than to compute one correlation function of length QL. The first transmission symbol can thus be detected in the received signal based on a much shorter correlation function and the rough position of the other transmission symbols will be known from the first transmission symbol so that the computational burden for the subsequent transmission symbols is much lower. By summing the different correlation functions up, the summed correlation function is equally robust than one correlation function of one code of length QL. By transmitting a different information by each transmission code, the security of the time of arrival can be improved by a longer transmitted information of Q*M (if each transmission code transmits the same number M of bits). In this embodiment, plurality Q of transmission codes are transmitted one after the other in the same transmission channel, preferably also in the same transmission message. The receiver can then detect the different transmission codes in the received signal (of the same message) by their corresponding correlations with the received signal.

This embodiment can be further improved. In this improved embodiment, a pair of transmission codes G1(I1) and G2(I2) is generated. Thus, at least 2 transmission codes are generated, transmitted and/or received, more general P pairs of transmission codes are generated, transmitted and/or received so that 2P transmission codes are generated, transmitted and/or generated. Since the correlation function of the 2P transmission codes are summed up, their order of transmission is arbitrarily. Each transmission code G1(I1), G2(I2) of a pair is distinct from the other one of the pair. Each transmission code G1(I1) and G2(I2) of the pair G1(I1) and G2(12) carries preferably a different information I1 and 12. The first transmission code G1(I1) and the second transmission code G2(12) have preferably the same parameters for one or more of the following parameters of the transmission codes of the pair: length L of the transmission code, length N of the first groups, lengths $w_i$ of the second groups. However, they could also be chosen with different parameters. Especially, the first groups of the two transmission codes can be constructed based on different Golay pairs (mating or not). The first transmission code G1(I1) has the correlation property with a ZCZ of W1 (minimum length of the second groups of the first transmission code) and the second transmission code G2(I2) has the correlation property with a ZCZ of W2 (minimum length of the second groups of the second transmission code). For simplicity, it is assumed subsequently that W1=W2=W. To be more precise, the above described codes have a correlation function which has a main peak for zero delay (d=0), has the ZCZ of W for d=1,...,W and shows a first order side lobes and then again a second order zero correlation zone until the second order side lobes. Depending on the code, especially with varying second group lengths, the arrangement of the side lobes can vary slightly. The first order side lobes are defined as the group of non-zero components of the correlation function being the closest to the main peak (arranged at a distance of W). In general, the n-th order side lobes are defined as the n-th group of non-zero components of the correlation function from the main peak. A group of non-zero components is defined as a set of neighbouring components of the correlation function being all non-zero.

According to the present improvement, the two transmission codes G1 (I1) and G2(I2) are constructed such that first order side lobes of the correlation function $R_{G1}(d)$ of the first transmission code G1(I1) corresponds to the inverted first order side lobes of the correlation function $R_{G2}(d)$ of the second transmission code G2(I2). In other words, the two transmission codes G1 (I1) and G2(I2) are constructed such that the sum of the first order side lobes of the correlation function $R_{G1}(d)$ of the first transmission code G1(I1) and the first order side lobes of the correlation function $R_{G2}(d)$ of the second transmission code G2(I2) are zero. Since the first side lobes and the second side lobes are separated again by W zeros (second order ZCZ), the sum of the correlation function of the pair of transmission codes G1(I1) and G2(I2) would have a ZCZ of the sum of the of the ZCZ of first order, the ZCZ of second order and the length of the first order side lobes, i.e. roughly 2W+N. Thus, the sum of the correlation function $R_{G1}(d)$ of the first transmission code G1 (I1) and of the correlation function $R_{G2}(d)$ of the second transmission code G2(I2) would have an extended ZCZ. In most cases, the ZCZ of this sum is more than doubled. The first transmission code G1(I1) is generated arbitrarily. The second transmission code G2(I2) of the pair is then chosen such that the explained property is fulfilled. It is also possible to construct both with the aim of this property. Such a property conform construction of one or both of the transmission codes of the pair can be realized by trial-and-error simulation. In an alternative embodiment, the transmission code(s) of the pair are constructed based on a formula. Since the pairs with this property must be recomputed for each pair of Information I1, I2, the pair of transmission codes must be recomputed each time. However, due to the high degree of freedom in the construction of the transmission codes, there are many alternative pairs of transmission codes for the couple of information I1, I2. The different transmission codes of one pair can for example by varied in their order of the first groups or in the Golay pairs used. If the transmitted information I1 and I2 is random information, it is also possible (alternatively or in addition) to change the transmitted random information such that the property is fulfilled. Since there are many potential pairs existing, this would not challenge the security of the transmitted random information.

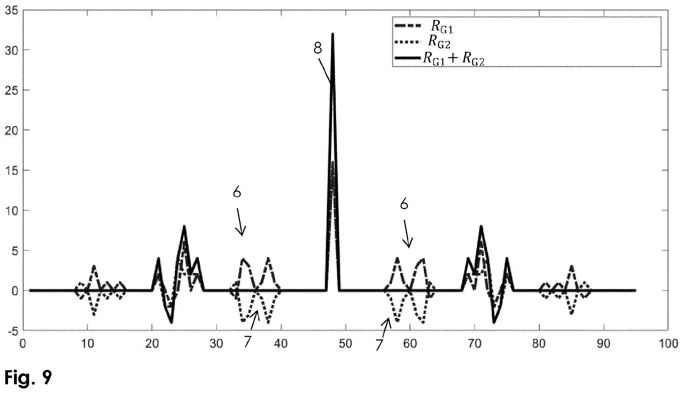

In Fig. 9, this improvement shall be explained with an example of a pair of transmission codes G1(I1) and G2(I2). The transmission symbols G1 and G2 are constructed based on the following two Golay pairs of length N=4 with $c_0$=[1,1,1,-1]; $s_0$=[1,-1,1,1]; $c_1$=[1,1,-1,1]; $s_1$=[1,-1,-1,-1]; with M=4 first groups. The transmitted information of the two transmission codes is I1= [1,1,1,-1] and I2=[1,1,1,1] resulting for example in the two transmission codes

$$G1(I1)=[\, s_1,\, a_w,\, s_0,\, a_w,\, c_0,\, a_w,\, -c_1,\, a_w\,]$$

$$G2(I2)=[\, s_1,\, a_w,\, c_1,\, a_w,\, c_0,\, a_w,\, c_1,\, a_w\,]$$

Providing a pair with the above defined extended ZCZ property of the sum of their correlation functions. $a_w$ is the second group of length W. Fig. 9 shows now the correlation function $R_{G1}$ of the first transmission code G1(I1) (first correlation function) and the correlation function $R_{G2}$ of the second transmission code G2(I2) (second correlation function) each with a ZCZ of W and the first order side lobes 6, 7. The first order side lobes 6 of the first correlation function and the first order side lobes 7 of the second correlation function are such that they cancel them out when summed up. Thus, the sum of the first and second correlation function (sum function) makes the first order side lobes disappear. Thus, the sum function has an extended ZCZ of minimum 2 times W. In Fig. 9, W was chosen as 8.

It should be understood that the present invention is not limited to the described embodiments and that variations can be applied without going outside of the scope of the claims.

**Claims**

1. Transmission code for transmission in a transmission channel, wherein the transmission code comprises a sequence of components, wherein each component can assume a first component value, a second component value and an idle value, wherein each component represents a transmission slot (3), wherein the first component value in one of the components represents the transmission of a first transmission symbol (1) in the respective transmission slot (3), the second component value represents the transmission of a second transmission symbol (2) in the respective transmission slot (3), wherein the idle value represents the transmission of no transmission symbol in the respective transmission slot (3), wherein the transmission code comprises a number M of at least two first groups and a plurality of second groups, wherein each first group comprises a number N of at least two components, wherein each component of each first group can assume the first component value and the second component value, wherein all the first groups have the same length, wherein each second group comprises only idle values, each two consecutive first groups are separated by one of the second groups, wherein the first groups are designed such that each first group can carry a bit and that the transmission code has a zero correlation zone property for any M bits carried by the first groups.

2. Transmission code according to claim 1, wherein each first group is constructed based on one Golay element of at least one Golay pair of length N, wherein each Golay pair has a first Golay element and a second Golay element.

3. Transmission code according to claim 2, wherein the at least one Golay pair comprise two Golay pairs of length N being mates of each other.

4. Transmission code according to claim 3, wherein the M first groups can be divided in first set of first groups and a second set of first groups, wherein each first group of the first set corresponds on a first Golay element of one of the at least one Golay pair and has one related first group in the second set which is based on the second Golay element of the one of the at least one Golay pair.

5. Transmission code according to one of the claims 1 to 4, wherein the transmission code is a code which is detected at the receiver in the received signal by performing a correlation of the received signal.

6. Transmission code according to one of the claims 1 to 5, wherein the transmission code can be determined by the equation or variations of this formula explained below

$$G(z) = \sum_{i=1}^{p} \left[ B_{2i-1} z^{\sum_{m=1}^{i} w_m} c_{\pi i}(z) + B_{p+2i-1} z^{pN+\sum_{f=1}^{p+i} w_f} * s_{\pi i}(z) \right] * z^{(i-1)N}$$

with the first component value being represented by one, with the second component value being represented by minus one, with B being a random sequence of length M, with $B_i$ being the i-th component of the random binary sequence of length M having the first component value or the second component value for i=1, ..., M, with p being M divided by two, with Golay pairs $(c_0(z),s_0(z))$ and $(c_1(z),s_1(z))$, with $\pi i$ being the $i^{th}$ bit of the binary representation $\pi$ of a random integer in the set $[0,2^p - 1]$, with $w_i$ being the length of the i-th second group or being the number of zeros inserted after the i-th first group, wherein the variations the equation above cover any other order of the first groups defined by this equation can arbitrarily and the use of other Golay pairs than in the equation.

7. Transmission code according to one of the claims 1 to 6, wherein the transmission channel is a pulsed UWB radio channel, wherein the first transmission symbol is a first UWB pulse, wherein the second transmission symbol is a second UWB pulse.

8. Method for processing in a device a transmission code according to one of claims 1 to 7.

9. Method according to claim 8, wherein the transmission code carries an information, wherein the information has bit length equal to or smaller than M corresponding to the number M of first groups of the transmission code.

10. Method according to claim 9, wherein the transmission code carrying the information is obtained by modulating the information on a predefined transmission code according to one of claims 1 to 7, wherein each bit of the information is modulated on a different first group of the predefined transmission code.

11. Method according to one of claims 9 to 10, wherein the transmission code modulated with the information is transmitted in the transmission channel to a receiving device.

12. Method according to one of claims 8 to 10, wherein the device receives a signal in the transmission channel, wherein the device computes a correlation function of the modulated transmission code in the received signal.

13. Method according to claim 12, wherein a time of arrival of the transmission code is determined based on the correlation function.

14. Method according to claim 13, wherein the time of arrival of the first group of the transmission symbol is determined based on the time of arrival of the transmission code determined, and the bit modulated on each first group is decoded from the signal received at the determined time of arrivals of the respective first group.

**15.** Method according to claim 14, wherein the decoded information is used to verify the security of the time of arrival measurement.

| c(1) | c(2) | c(3) | c(4) | c(5) | c(6) | c(7) | c(8) |
|------|------|------|------|------|------|------|------|
| 1 | -1 | 1 | 0 | 0 | -1 | 1 | 1 |
| 1 | $-z$ | $+z^2$ |  |  | $-z^5$ | $+z^6$ | $+z^7$ |

**Fig. 1**        Prior Art

|  | coefficient for | | | | | | | | | | | | | | | | | | | |
|---|---|---|---|---|---|---|---|---|---|---|---|---|---|---|---|---|---|---|---|---|
|  | $z^0$ | $z^1$ | $z^2$ | $z^3$ | $z^4$ | $z^5$ | $z^6$ | $z^7$ | $z^8$ | $z^9$ | $z^{10}$ | $z^{11}$ | $z^{12}$ | $z^{13}$ | $z^{14}$ | $z^{15}$ | $z^{16}$ | $z^{17}$ | $z^{18}$ | $z^{19}$ |
| $-z^0 c_0(z)$ | 0 | 0 | 0 | -1 | -1 | | | | | | | | | | | | | | | |
| $z^9 c_1(z)$ | 0 | 0 | 0 | 0 | 0 | 0 | 0 | 0 | 0 | -1 | 1 | | | | | | | | | |
| $z^{14} s_0(z)$ | 0 | 0 | 0 | 0 | 0 | 0 | 0 | 0 | 0 | 0 | 0 | 0 | 0 | 0 | 1 | -1 | | | | |
| $z^{18} s_1(z)$ | 0 | 0 | 0 | 0 | 0 | 0 | 0 | 0 | 0 | 0 | 0 | 0 | 0 | 0 | 0 | 0 | 0 | 0 | -1 | -1 |
| $G(z)$ | 0 | 0 | 0 | -1 | -1 | 0 | 0 | 0 | 0 | -1 | 1 | 0 | 0 | 0 | 1 | -1 | 0 | 0 | -1 | -1 |

**Fig. 2**

**Fig. 3**

Fig. 4

Fig. 5

Fig. 6

Fig. 7

Fig. 8

**Fig. 9**

Europäisches
Patentamt

European
Patent Office

Office européen
des brevets

## EUROPEAN SEARCH REPORT

Application Number

EP 22 20 7354

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEE KYUN NG ET AL: "A Novel Ternary CDMA Code for TPSK Modulation Scheme", WIRELESS PERSONAL COMMUNICATIONS, KLUWER ACADEMIC PUBLISHERS, DO, vol. 58, no. 2, 12 December 2009 (2009-12-12), pages 315-335, XP019899991, ISSN: 1572-834X, DOI: 10.1007/S11277-009-9893-Y | 1,5,8-12 | INV. H04J13/00 |
| Y | * Sections 1, 2, 4, 5; figures 3, 4, 8, 9; table 1 * | 2-4,7, 13-15 | |
| A | | 6 | |
| Y | VELAZQUEZ-GUTIERREZ JUAN M ET AL: "Sequence Sets in Wireless Communication Systems: A Survey", IEEE COMMUNICATIONS SURVEYS & TUTORIALS, vol. 19, no. 2, 14 December 2016 (2016-12-14), pages 1225-1248, XP011651808, DOI: 10.1109/COMST.2016.2639739 [retrieved on 2017-06-02] * Sections I, IV * | 2-4 | |
| Y | CHAO ZHANG ET AL: "Construction and Application of OVSF-ZCZ Originated from LS and GO Sequences", SIGNAL DESIGN AND ITS APPLICATIONS IN COMMUNICATIONS, 2007. IWSDA 2007 . 3RD INTERNATIONAL WORKSHOP ON, IEEE, PI, 1 September 2007 (2007-09-01), pages 34-38, XP031194266, ISBN: 978-1-4244-1073-6 * Sections 1, 2.2 * | 2-4 | |
| Y | US 2007/168841 A1 (LAKKIS ISMAIL [US]) 19 July 2007 (2007-07-19) * paragraphs [0005], [0077], [0126] * | 7 | |

TECHNICAL FIELDS SEARCHED (IPC)

H04J

-/--

The present search report has been drawn up for all claims

| Place of search | Date of completion of the search | Examiner |
|---|---|---|
| Munich | 31 March 2023 | Kreppel, Jan |

EPO FORM 1503 03.82 (P04C01)

Europäisches
Patentamt

European
Patent Office

Office européen
des brevets

# EUROPEAN SEARCH REPORT

Application Number

EP 22 20 7354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/014526 A1 (HAMMERSCHMIDT JOACHIM S [US] ET AL) 9 January 2020 (2020-01-09) * paragraphs [0009] - [0012], [0068] - [0072] * | 7,13-15 | |

TECHNICAL FIELDS
SEARCHED      (IPC)

The present search report has been drawn up for all claims

| Place of search | Date of completion of the search | Examiner |
|---|---|---|
| Munich | 31 March 2023 | Kreppel, Jan |

EPO FORM 1503 03.82 (P04C01)

## ANNEX TO THE EUROPEAN SEARCH REPORT
## ON EUROPEAN PATENT APPLICATION NO.

EP 22 20 7354

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| US 2007168841 | A1 | 19-07-2007 | NONE | | |
| US 2020014526 | A1 | 09-01-2020 | CN | 110691356 A | 14-01-2020 |
| | | | JP | 6929904 B2 | 01-09-2021 |
| | | | JP | 2020017947 A | 30-01-2020 |
| | | | KR | 20200005477 A | 15-01-2020 |
| | | | US | 2020014526 A1 | 09-01-2020 |

EPO FORM P0459

For more details about this annex : see Official Journal of the European Patent Office, No. 12/82

**EP 4 369 637 A1**

**Non-patent literature cited in the description**

- **STANCZAK et al.** *Are LAS-codes a miracle?,* 2001